# EUROPÄISCHE PATENTSCHRIFT

(11) **EP 2 144 574 B1**
(45) Veröffentlichungstag und Bekanntmachung des Hinweises auf die Patenterteilung: **09.08.2017**
(21) Anmeldenummer: 08749398.7
(22) Anmeldetag: 08.05.2008
(51) Int. Cl.: A61C 5/60, A61C 1/07, A61C 19/00

(54) **HANDGERÄT ZUR ABGABE EINES PASTÖSEN FÜLLUNGSMATERIALS**
HAND-HELD DEVICE FOR DISPENSING A PASTY FILLING MATERIAL
APPAREIL MANUEL DESTINÉ À ÉMETTRE UNE MATIÈRE DE REMPLISSAGE PÂTEUSE

(30) Priorität: 11.05.2007 DE 102007022205
(43) Veröffentlichungstag der Anmeldung: 20.01.2010
(73) Patentinhaber: Kaltenbach & Voigt GmbH, 88400 Biberach (DE)
(72) Erfinder: EMDE, Frank, 87700 Memmingen (DE)
(74) Vertreter: Thun, Clemens
(86) Internationale Anmeldenummer: PCT/EP2008/003705
(87) Internationale Veröffentlichungsnummer: WO 2008/138545

(56) Entgegenhaltungen:
- DE-A1- 10 001 513
- DE-U1- 29 517 958
- US-A- 4 673 353
- US-A- 5 007 837
- US-B1- 6 305 934

## Beschreibung

Die vorliegende Erfindung betrifft ein Handgerät gemäß dem Oberbegriff des Anspruchs 1, welches insbesondere für dentale Zwecke vorgesehen ist und Mittel zur Abgabe eines pastösen Füllungsmaterials aufweist.

In der Medizintechnik ist es bekannt, Kavitäten in einem tierischen oder menschlichen Körperteil mit einem aushärtbaren Füllungsmaterial auszufüllen. Hierfür werden Füllungsmaterialien verwendet, welche in einem pastösen oder flüssigen Zustand in die Kavität eingebracht werden und anschließend aushärten bzw. ausgehärtet werden. Das Aushärten dieser Füllungsmaterialien kann dabei insbesondere durch Bestrahlung derselben mit Licht geeigneter Wellenlänge unterstützt werden.

Ein zahnärztliches Handgerät, welches zur Abgabe einer pastösen Füllmasse ausgestaltet ist, ist bspw. aus der WO 2006/136398 A2 bekannt. Hierbei wird unter anderem vorgeschlagen, die Füllmasse während der Abgabe mit Ultraschall zu beaufschlagen, was zur Folge hat, dass diese besser in die Kavität eingebracht werden kann.

Üblicherweise erfolgt der Prozess der Einbringung der lichthärtenden Füllungsmaterialien schichtweise, um die Kavität in optimaler Weise auszufüllen. Hierbei wird jeweils eine geringe Menge des Füllungsmaterials in die Kavität einbracht und anschließend ausgehärtet, was bspw. mit Hilfe einer Lichtpolymerisationslampe erfolgen kann, wie sie in den Veröffentlichungen DE 196 19 154 A1 und DE 196 19 155 A1 beschrieben ist. In einem weiteren Arbeitsschritt wird dann wiederum Füllungsmaterial in die Kavität eingebracht und ausgehärtet, wobei sich dieser alternierende Vorgang solange wiederholt, bis die Kavität vollständig ausgefüllt wurde.

Ein zahnärztliches Handgerät, welches diese beiden Arbeitsschritte vereint ist beispielsweise in den Schriften US 6,305,934 B1, worauf die zweiteilige Form vom Anspruch 1 basiert, US 5,007,837 A, DE 295 179 58 U1 und US 4,673,353 A gezeigt. Dazu weisen die entsprechenden Handgeräte sowohl Mittel zur Abgabe von Füllungsmaterialien als auch Mittel zur Abgabe von Strahlung zur Aushärtung der Füllmaterialien auf.

Die DE 100 015 13 Alist ferner auf die Erniedrigung der Viskosität von Füllmaterialien während deren Ausbringung gerichtet. Dazu wird eine Düse, welche zahnärztliches Füllmaterial abgibt, in Schwingung versetzt.

Der vorliegenden Erfindung liegt die Aufgabe zugrunde, ausgehend von dem vorstehend beschriebenen Stand der Technik ein Handgerät, wie es bspw. aus der WO 2006/136398 A2 bekannt ist, derart weiterzuentwickeln, dass die Arbeitsvorgänge für einen Benutzer, insbesondere einen Zahnarzt erleichtern werden.

Die Aufgabe wird durch ein Handgerät mit den Merkmalen des unabhängigen Anspruchs 1 gelöst. Vorteilhafte Weiterbildungen der Erfindung sind Gegenstand der abhängigen Ansprüche.

Gemäß der vorliegenden Erfindung wird ein Handgerät, insbesondere für dentale Zwecke vorgeschlagen, welches zunächst Mittel zur Abgabe eines pastösen Füllungsmaterials aufweist. Erfindungsgemäß ist das Handgerät dadurch gekennzeichnet, dass zusätzlich Mittel zur Abgabe einer die Aushärtung das Füllungsmaterials bewirkenden Strahlung an dem Handgerät vorgesehen sind.

Die erfindungsgemäße Lösung beruht also auf dem Gedanken, dass nunmehr ein Handgerät zur Verfügung gestellt wird, welches beide Zwecke - Abgabe des pastösen Füllungsmaterials und strahlungsinduzierte Aushärtung des Füllungsmaterials - erfüllt. Dies hat zur Folge, dass ein Zahnarzt bei dem Einbringen der Füllung in die Zahnkavität nicht dauerhaft zwischen zwei verschiedenen Geräten wechseln muss, sondern stattdessen über den gesamten Arbeitsvorgang hinweg ein einziges Gerät benutzen kann. Dies führt nicht nur zu einer Erleichterung der Durchführung der Prozedur, sondern auch zu einer nicht unbeträchtlichen Zeitersparnis. Ferner kann die Qualität des Arbeitsvorgangs verbessert werden, da es nicht mehr erforderlich ist, in wiederholtem Male ein Handgerät neu an dem zu behandelnden Zahn anzusetzen.

Die Mittel zur Strahlungsabgabe sind vorzugsweise durch eine Lichtquelle gebildet. Ferner können die Mittel zur Abgabe des Füllungsmaterials eine am vorderen Ende des Handgeräts befindlichen Austrittsdüse umfassen. Diese kann in einem nicht erfindungsgemäßen Ausführungsbeispiel Bestandteil eines Verdichtungselements sein, welches über eine in dem Handgerät befindliche Antriebseinheit mit Ultraschallschwingungen beaufschlagbar ist. Der Zweck des Einsatzes der Ultraschallschwingungen kann dabei nicht nur darin liegen, wie in der WO 2006/136398 A2 beschrieben die Viskosität des Füllungsmaterials während des Ausbringens zu erhöhen. Stattdessen kann ferner auch mit Hilfe des Verdichtungselements die in die Kavität eingebrachte Masse zunächst verdichtet werden, bevor diese lichtinduziert ausgehärtet wird.

Ferner ist erfindungsgemäß vorgesehen, dass die Austrittsdüse nach dem Ausbringen des Füllungsmaterials mit einer Modellationsspitze versehen wird, welche dazu genutzt wird, vor dem endgültigen Aushärten des Materials dieses in eine gewünschte Form zu bringen, insbesondere Materialüberschüsse abzutragen. Es hat sich gezeigt, dass für den Fall, dass diese Spitze mit Schall- bzw. Ultraschall beaufschlagt wird, eine besonders einfache aber genaue Bearbeitung des Materials ermöglicht wird, so dass letztendlich Füllungen mit einer sehr hohen Qualität erstellt werden können.

Die Austrittsdüse ist vorzugsweise derart ausgebildet, dass das Füllungsmaterials gegenüber einer Längsachse des Handgeräts seitlich abgegeben wird. In diesem Fall ist ferner vorgesehen, dass die Mittel zur Strahlungsabgabe derart ausgebildet sind, dass die Abgabe der Strahlung im Hinblick auf die Längsachse des Handgeräts versetzt, vorzugsweise um 90° versetzt gegenüber der Abgabe des Füllungsmaterials erfolgt. Bei einem Wechsel zwischen Abgabe des Füllungsmaterials und Aushärtung mit Hilfe des Lichts muss also das Handgerät lediglich um 90° verdreht werden, was die Handhabung besonders vereinfacht. Ferner ist aufgrund dieser speziellen Konfiguration sichergestellt, dass das Füllungsmaterial nicht bereits während des Ausbringens versehentlich ausgehärtet wird.

Andere Weiterbildungen der Erfindung betreffen Gedanken, durch welche die Durchführung der Behandlung nochmals weiter verbessert werden kann. So kann bspw. vorgesehen sein, dass an dem Handgerät Mittel zur Auswahl und Veränderung der Viskosität des abgegebenen Füllungsmaterials vorgesehen sind. Hierbei kann also insbesondere die Viskosität des Materials während des Ausbringens eingestellt werden, was je nachdem, in welcher Weise die Kavität ausgestaltet ist, besondere Vorteile mit sich bringen kann. Insbesondere ist sichergestellt, dass die Kavität lückenfrei mit dem Material ausgefüllt werden kann.

Eine weitere Möglichkeit besteht ferner darin, dass in dem Handgerät Füllungsmaterialien mit unterschiedlichen Eigenschaften, insbesondere unterschiedlichen Farben vorgesehen sind. Mit Hilfe eines entsprechenden Auswahlmechanismus kann dann ein Material mit der gewünschten Eigenschaft ausgebracht werden, so dass je nach Bedarf eine Ausführung der Kavität in gewünschter Weise erfolgen kann.

Wie bereits zuvor erwähnt wurde, kann insbesondere vorgesehen sein, dass beim Ausbringen des Füllungsmaterials dieses mit Ultraschall beaufschlagt wird. Es wäre allerdings auch ein Ausbringen mit Hilfe eines mechanischen Stempels denkbar.

Nachfolgend soll die Erfindung anhand der beiliegenden Zeichnung näher erläutert werden. Es zeigen:
- Fig. 1: ein Ausführungsbeispiel eines erfindungsgemäßen Handgeräts in perspektivischer Darstellung;
- Fig. 2a und 2b: die bei der Ausfüllung einer Zahnkavität erforderlichen Arbeitsschritte unter Verwendung des erfindungsgemäßen Handgeräts;
- Fig. 3a bis 3c: die Arbeitsweise bei einer alternativen nicht erfindungsgemäßen Form des Handgeräts, bei der als Zwischenschritt eine Verdichtung des eingebrachten Füllungsmaterials vorgesehen ist, und
- Fig. 4a bis 4c: die Arbeitsweise bei einer weiteren abgewandelten Form des Handgeräts.

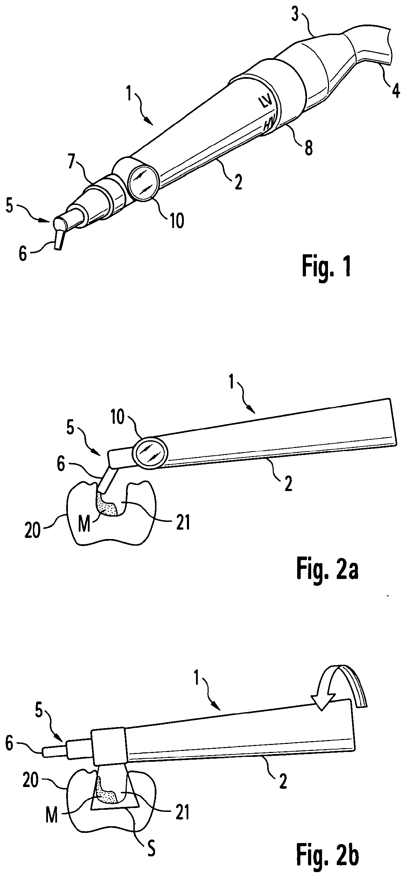

Das in Fig. 1 dargestellte und allgemein mit dem Bezugszeichen 1 versehene erfindungsgemäße Handgerät weist eine längliche Griffhülse 2 auf, an deren hinteren Ende Kupplungselemente 3 zur Verbindung mit einem Versorgungsschlauch 4 vorgesehen sind. Der Versorgungsschlauch 4 führt dabei zu einer - nicht näher dargestellten - Versorgungseinheit, über die dem Gerät 1 Versorgungsmedien, insbesondere Strom zur Verfügung gestellt werden.

Primäre Aufgabe des Handgeräts 1 ist es zunächst, ein pastöses Füllungsmaterial anzugeben bzw. zur Verfügung zu stellen, mit dessen Hilfe Kavitäten insbesondere in Zähnen ausgefüllt werden können. Hierzu ist am vorderen Ende des Handgeräts 1 ein Applikationselement 5 ausgebildet, welches eine gegenüber der Längsachse der Griffhülse 2 seitlich abstehende Austrittsdüse 6 aufweist. Über diese Düse 6 wird das pastöse Füllungsmaterial bei Bedarf abgegeben.

Wie bereits aus der zuvor angesprochenen WO 2006/136398 A2 bekannt, kann vorgesehen sein, dass das Ausbringen des pastösen Füllungsmaterials durch Ultraschall unterstützt wird. Dies hat zur Folge, dass durch entsprechende Ultraschallbeaufschlagung der Austrittsdüse 6 das Material während des Ausbringens in einen viskosen Zustand überführt wird, der ein besonders effektives und genaues Einbringen des Füllungsmaterials ermöglicht. Innerhalb des Geräts 1 ist hierzu dementsprechend zumindest ein Vorratsbehälter mit dem Füllungsmaterial sowie ein entsprechender Ausbringmechanismus vorhanden. Ferner ist in diesem Fall auch ein Schwingungsgenerator zur Erzeugung von Ultraschallschwingungen vorgesehen. Hinsichtlich der verschiedenen Möglichkeiten zum Ausbringen des Füllungsmaterials wird wiederum auf die zuvor angesprochene internationale Offenlegungsschrift verwiesen.

Wie der Darstellung in Fig. 1 ferner entnommen werden kann, sind an dem Handgerät 1 zwei Einstellringe vorgesehen. Ein erster, im vorderen Bereich angeordneter Einstellring 7 dient hierbei dazu, einen von dem Vorratsbehälter für das Füllungsmaterial zu der Austrittsdüse 6 führenden Ausbringkanal wahlweise zu öffnen bzw. zu verschließen, um zu verhindern, dass ungewollt entsprechendes Material austritt. Mit Hilfe des zweiten, hinteren Einstellrings 8 kann hingegen die Viskosität des abgegebenen Materials zwischen zumindest zwei verschiedenen Bereichen eingestellt werden. Eine wahlweise Veränderung der Viskosität, die bspw. durch eine entsprechende Ansteuerung des Schwingungsgenerators erfolgen kann, bringt insofern Vorteile mit sich, als die Viskosität an die entsprechende Form der auszufüllenden Kavität angepasst werden kann. Insbesondere bei Kavitäten mit Bereichen, welche nur schwer zugängig sind, ist dabei die Einbringung eines Materials mit einer verhältnismäßig hohen Viskosität sinnvoll, da in diesem Fall die Kavität besser gefüllt werden kann.

Eine andere denkbare Weiterbildung wäre die Verwendung mehrerer Vorratsbehälter mit Füllungsmaterialien unterschiedlicher Eigenschaften, bspw. unterschiedlicher Farben. Je nach Bedarf kann dann durch eine entsprechende Einstellung des Auswahlrings 8 ein geeigneter Vorratsbehälter ausgewählt werden, dessen Material dann mit Hilfe eines geeigneten Ausbringmechanismusses über die Austrittsdüse 6 in die Kavität eingebracht werden kann. Hierdurch besteht die Möglichkeit, jederzeit ein Material einzusetzen, welches sich hinsichtlich seiner äußeren Gestaltung in optimaler Weise an den zu behandelnden Zahn anpasst. Dieser Gedanke der Auswahl aus verschiedenen Füllungsmaterialien, der beispielsweise in Form eines Revolvermechanismusses realisiert werden kann, könnte insbesondere auch unabhängig von dem nachfolgend beschriebenen Gedanken der Ergänzung des Geräts 1 mit Bestrahlungsmitteln eingesetzt werden.

Das bislang beschriebene Handgerät 1 dient also zum einen dazu, Füllungsmaterialien, mit deren Hilfe eine Zahnkavität ausgefüllt werden kann, zur Verfügung stellen. Wie bereits eingangs erwähnt wurde, weisen derartige Materialien oftmals die Eigenschaft auf, dass sie durch eine geeignete Bestrahlung effektiver ausgehärtet werden können. Um nunmehr während der Behandlung einen ständigen Wechsel zwischen unterschiedlichen Geräten zu vermeiden, ist das Handgerät 1 erfindungsgemäß mit Bestrahlungsmitteln ausgestattet, welche nachfolgend erläutert werden sollen.

Die in Fig. 1 lediglich schematisch angedeuteten Bestrahlungsmittel sind durch eine Lichtquelle 10 gebildet, über die Licht einer geeigneten Wellenlänge (z.B. im Bereich von etwa 320nm bis 550nm) abgegeben wird. Dieses Licht bewirkt eine Aushärtung des Füllungsmaterials, wie es bereits aus den Veröffentlichungen DE 196 19 154 A1 und DE 196 19 155 A1 bekannt ist. Wie der Darstellung ferner entnommen werden kann, ist die Lichtquelle 10, die beispielsweise durch eine LED oder eine Laser-Diode gebildet sein könnte, im vorderen Bereich der Griffhülse 2 angeordnet, allerdings derart, dass die Lichtabgabe im Hinblick auf die Längsachse des Geräts 1 gegenüber der Orientierung der Austrittsdüse 6 verdreht, vorzugsweise um 90° verdreht erfolgt. Dies hat zur Folge, dass sichergestellt ist, dass das Füllungsmaterial während des Ausbringens aus der Austrittsdüse 6 keinesfalls durch die Lichtquelle 10 bestrahlt werden und dementsprechend nicht vorzeitig aushärten kann. Es ist also sichergestellt, dass wie bislang in gewohnter Weise das Material in effektiver Weise ausgebracht werden kann.

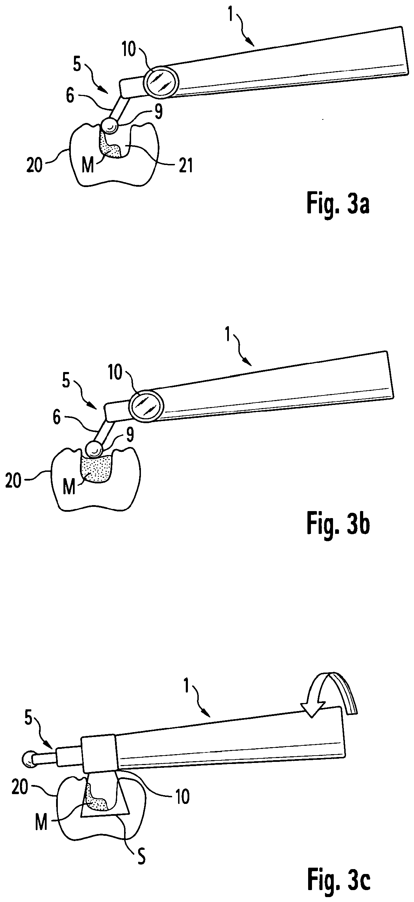

Die sich bei dem erfindungsgemäßen Handgerät 1 ergebende Arbeitsweise sowie die sich hierbei ergebenden Vorteile sollen nachfolgend anhand der Fig. 2a und 2b bzw. 3a bis 3c erläutert werden.

Die Fig. 2a und 2b zeigen dabei die verschiedenen Arbeitsschritte bei Verwendung des in Fig. 1 dargestellten Handgeräts. Hierbei soll die Kavität 21 eines Zahns 20 ausgefüllt werden, wobei - wie bereits erwähnt - schichtweise Füllungsmaterial M in die Kavität 21 eingebracht und anschließend ausgehärtet wird. Fig. 2a zeigt hierbei den Schritt des Einbringens des Füllungsmaterials M, was wie zuvor erläutert über die Austrittsdüse 6 erfolgt. Der Darstellung in Fig. 2a kann hierbei entnommen werden, dass die Lichtquelle 10 im Hinblick auf die Düse 6 derart ausgerichtet bzw. orientiert ist, dass diese nicht die Kavität 21 beleuchtet. Das heißt, das von der Lichtquelle 10 abgegebene Licht beeinträchtigt nicht das effektive Ausfüllen der Kavität 21.

Nachdem eine bestimmte Menge des Füllungsmaterials M eingebracht wurde, muss dieses - bevor weiteres Material eingebracht wird - zunächst ausgehärtet werden. Hierzu muss der Zahnarzt wie in Fig. 2b dargestellt, das Handgerät 1 um etwa 90° verdrehen, was zur Folge hat, dass nunmehr die Lichtquelle 10 auf die Kavität 21 des Zahns 20 ausgerichtet ist und dementsprechend die Strahlung S zur Aushärtung des Füllungsmaterials M eingesetzt werden kann. Nach der erfolgten Aushärtung des Materials M wird das Handgerät 1 wieder in die Fig. 2a dargestellte Position gedreht und es kann von Neuem das Einbringen von Material M erfolgen.

Aus den vorstehenden Schilderungen ergibt sich, dass - ohne das Gerät wechseln zu müssen - problemlos alternierend Material in die Kavität eingebracht und ausgehärtet werden kann. Diese Vorgehensweise ist dementsprechend mit einer verhältnismäßig hohen Zeitersparnis verbunden. Ferner muss auch nicht jedes Mal von Neuem das Handstück an dem Zahn angesetzt werden, wodurch die Handhabung deutlich vereinfacht wird.

Die Fig. 3a bis 3c zeigen die Verwendung eines alternativen Ausführungsbeispiels eines erfindungsgemäßen Handgeräts 1. Dieses zeichnet sich dadurch aus, dass am vorderen Ende der Austrittsdüse 6 zusätzlich ein Verdichtungselement 9 in Form eines kugelförmigen Aufsatzes angeordnet ist. Dieser Aufsatz 9 wird ebenso wie die Düse 6 durch einen in dem Handgerät 1 befindlichen Generator mit Ultraschallschwingungen beaufschlagt.

Nachdem nunmehr entsprechend der Darstellung in Fig. 3a Füllungsmaterial M in die Kavität 21 eingebracht wurde, wird dieses zunächst mit Hilfe des Verdichtungselements 9, welches in Ultraschallschwingungen versetzt wurde, verdichtet. Hierbei verändern sich die Eigenschaften des Füllungsmaterials M in positiver Weise. Anschließend wird wiederum nach Verdrehen des Handgeräts 1 die eingebrachte und verdichtete Füllmasse M beleuchtet und ausgehärtet. Die dargestellten Arbeitsschritte wiederholen sich wiederum mehrmals, bis die Kavität 21 des Zahns 20 vollständig ausgefüllt wurde.

Auch bei dieser Ausführungsform ist kein Wechsel zwischen mehreren unterschiedlichen Geräte erforderlich, was wiederum zu einer sehr einfachen Durchführung der Prozedur führt.

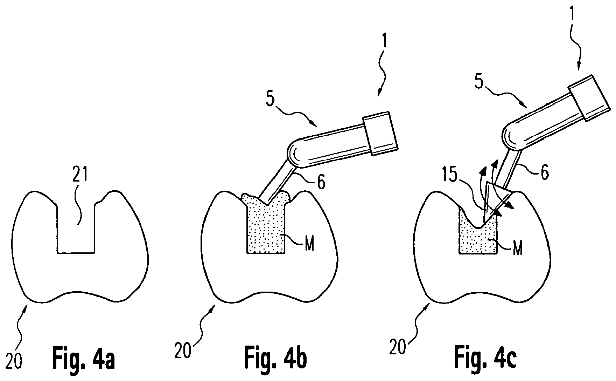

Ein erfindungsgemäßes Handgerät 1 ist in den Figuren 4a bis 4c dargestellt, wobei hier lediglich der vordere Endbereich des Handgeräts 1 gezeigt ist. Wiederum wird zunächst die Kavität 21 eines Zahnes 20 mit dem Füllungsmaterial M aufgefüllt, wobei die Abgabe des Füllungsmaterials M in gleicher Weise wie zuvor über die Austrittsdüse 6 des Applikationselements 5 erfolgt und die Düse 6 während der Abgabe des Materials M mit Ultraschall beaufschlagt ist.

In einem weiteren Arbeitsschritt, der in Fig. 4c dargestellt ist, wird nunmehr das Füllungsmaterial M zu der letztendlich gewünschten Form modelliert. Hierzu wird das vordere Ende der Austrittsdüse 6 mit einer - vorzugsweise konisch geformten - Modellationsspitze 15 versehen, mit deren Hilfe das Material bearbeitet wird. Die Düse 6 und damit auch die Modellationsspitze 15 werden während dieses Bearbeitungsvorgangs wiederum mit Ultraschall beaufschlagt.

Diese besondere Vorgehensweise beruht auf der Erkenntnis, dass aufgrund der partiell sehr begrenzten Wärmeentwicklung und dem Aufbrechen chemischer Verbindungen mit Schall oder Ultraschallquellen derartige Komposite sehr leicht geschnitzt bzw. in Form gebracht werden können. Dieser Effekt wird nunmehr bei der Füllungstherapie ausgenutzt, um die hoch viskösen Füllungsmaterialien in die gewünschte anatomische Zahnform zu überführen.

Das vorgeschlagene Verfahren stellt gegenüber der bisherigen Vorgehensweise einen deutlichen Fortschritt dar. Bei bisherigen Verfahren ist es notwendig, Füllungsmaterialüberschüsse über die Präparationsränder - insbesondere im Okklusalbereich - mit einem Spatel zu verteilen und in einem dünnen Film auf der Okklusalfläche auslaufen zu lassen bzw. idealerweise komplett zu entfernen. Da dies nicht immer vollständig gelingt, bzw. bei der Entfernung das Material in seiner Oberflächenkontinuität geschädigt wird, ist es nach der Aushärtung des Materials notwendig, dieses mit einem Schleifkörper zu entfernen. Dies ist zeitaufwändig und häufig wird dabei gesunde Zahnsubstanz ebenfalls abgetragen. Des weiteren ist die Modellation schwierig durchzuführen, da nur durch ein "Verdrücken" der Füllungsmasse die entsprechende anatomische Zahnform nur schwer wiederhergestellt werden kann.

Bei dem in den Figuren 4a bis 4c vorgeschlagenen Verfahren hingegen werden die Füllungsmaterialüberschüsse mit Hilfe der Modellationsspitze 15 sozusagen einfach "abgeschmolzen". Sollte die Okklusalfläche das Zahns 20 noch größtenteils vorhanden sein, so kann diese als Abstützung und "Leitbahn" benutzt werden, um eine anatomisch korrekte Gestaltung vorzunehmen. Hierbei ergibt sich auch ein Zeitvorteil, da bei geringeren oder keinen Überständen die Okklusalfläche weniger oder gar nicht nachträglich eingeschliffen werden muss und der Gestaltungsvorgang sehr viel schneller abgeschlossen ist. Auch bei der Restauration von Frontzähnen ist eine sehr leichte Formgebung möglich, weil hier ebenfalls ein sehr glatter Übergang von gesunder zu ersetzter Zahnsubstanz - schon während der Modellation im plastischen Zustand - möglich ist. Bei bisherigen Verfahren muss hier meist besonders stark - nach dem Aushärten des Materials - eingeschliffen werden.

Die Modellationsspitze 15 erfüllt im dargestellten Beispiel eine Doppelfunktion, da sie gleichzeitig auch als Verschlusskappe für die Komposite-Kartuschen eingesetzt werden kann. Hierbei erfolgt die Transmission der Schall- oder Ultraschallwellen über die Kartusche an die Verschlusskappe.

Nach dem Bearbeiten des Füllungsmaterials M wird dieses dann ausgehärtet, wozu wiederum die an dem Handgerät 1 angeordnete - in den Figuren nicht dargestellte - Lichtquelle genutzt werden kann. Der in den Figuren 4a bis 4c dargestellte Gedanke könnte allerdings auch unabhängig davon zum Einsatz kommen, ob die Lichtquelle an dem Handgerät 1 selbst angebracht ist oder eine separate Lichtquelle für das Aushärten zum Einsatz kommt. Ferner könnte die Modellationsspitze 15 auch an einem von dem Handgerät zur Abgabe des Füllungsmaterials M unabhängigen Bearbeitungsgerät, welches die Beaufschlagung der Spitze 15 mit Schall- oder Ultraschallwellen ermöglicht, zum Einsatz kommen.

Insgesamt gesehen wird dementsprechend die Durchführung einer Behandlung für den Zahnarzt wesentlich vereinfacht. Ferner besteht aufgrund der unterschiedlichen Auswahlmöglichkeiten hinsichtlich der Viskosität bzw. der Materialeigenschaften des Füllungsmaterials die Möglichkeit, den Zahn mit einem jeweils speziell geeigneten Material auszufüllen. Die Qualität der Behandlung wird hierbei also deutlich erhöht.

## Patentansprüche

1. Handgerät (1), insbesondere für dentale Zwecke,
mit Mittel zur Abgabe einer die Aushärtung des Füllungsmaterials (M) bewirkenden Strahlung, welche sich an dem Handgerät (1) befinden, Mitteln zur Abgabe eines pastösen Füllungsmaterials (M), wobei die Mittel zur Abgabe des Füllungsmaterials (M) eine am vorderen Ende des Handgeräts (1) befindliche Austrittsdüse (6) umfassen,
**dadurch gekennzeichnet,**
**dass** das Handgerät (1) eine an der Austrittsdüse (6) anbringbare Modellationsspitze (15) zur Bearbeitung des Füllungsmaterials (M) aufweist, wobei die Modellationsspitze (15) über eine in dem Handgerät (1) befindliche Antriebseinheit mit Schall- oder Ultraschallschwingungen beaufschlagbar ist.

2. Handgerät nach Anspruch 1,
**dadurch gekennzeichnet,**
**dass** die Mittel zur Strahlungsabgabe durch eine Lichtquelle (10), beispielsweise eine LED oder Laser-Diode gebildet sind.

3. Handgerät nach einem der vorhergehenden Ansprüche,
**dadurch gekennzeichnet,**
**dass** die Modellationsspitze (15) eine konische Form aufweist.

4. Handgerät nach einem der vorhergehenden Ansprüche,
**dadurch gekennzeichnet,**
**dass** die Austrittsdüse (6) derart ausgebildet ist, dass das Füllungsmaterial (M) gegenüber einer Längsachse des Handgeräts (1) seitlich abgegeben wird.

5. Handgerät nach Anspruch 4,
**dadurch gekennzeichnet,**
**dass** die Mittel zur Strahlungsabgabe derart ausgebildet sind, dass die Abgabe der Strahlung (S) im Hinblick auf die Längsachse des Handgeräts (1) versetzt, vorzugsweise um 90° versetzt gegenüber der Abgabe des Füllungsmaterials (M) erfolgt.

6. Handgerät nach einem der vorherigen Ansprüche,
**gekennzeichnet durch**
Mittel zur Einstellung der Viskosität des abgegebenen Füllungsmaterials (M).

7. Handgerät nach einem der vorherigen Ansprüche,
**gekennzeichnet durch**
Mittel zum Wahlweisen Öffnen bzw. Verschließen eines Ausbringkanals für das Füllungsmaterial (M).

8. Handgerät nach einem der vorherigen Ansprüche,
**gekennzeichnet durch**
mehrere Vorratsbehälter für Füllungsmaterialien (M) unterschiedlicher Eigenschaften sowie Auswahlmittel zum Wahlweisen Ausbringen eines der Füllungsmaterialien (M).

9. Handgerät nach Anspruch 8,
**dadurch gekennzeichnet,**
**dass** das Handgerät Mittel zur Auswahl und Veränderung der Viskosität des ausgebrachten Füllungsmaterials (M) aufweist.

## Claims

1. A hand-held device (1), in particular for dental purposes,
having means located on the hand-held device (1) for emitting radiation that effects hardening of the filling material (M),
means for dispensing a pasty filling material (M), wherein the means for dispensing the filling material (M) comprise an outlet nozzle (6) located at the front end of the hand-held device (1),
**characterised in that**
the hand-held device (1) has a modelling tip (15), which can be attached at the outlet nozzle (6), for working the filling material (M), wherein sonic or ultrasonic oscillations can be applied to the modelling tip (15) by way of a drive unit located in the hand-held device (1).

2. A hand-held device according to claim 1,
**characterised in that**
the means for emitting radiation are formed by a light source (10), for example an LED or laser diode.

3. A hand-held device according to one of the preceding claims,
**characterised in that**
the modelling tip (15) has a conical shape.

4. A hand-held device according to one of the preceding claims,
**characterised in that**
the outlet nozzle (6) is formed in such a way that the filling material (M) is dispensed laterally with respect to a longitudinal axis of the hand-held device (1).

5. A hand-held device according to claim 4,
**characterised in that**
the means for emitting radiation are formed in such a way that the emission of the radiation (S) with regard to the longitudinal axis of the hand-held device (1) is effected so as to be offset, preferably so as to be offset by 90°, with respect to the dispensing of the filling material (M).

6. A hand-held device according to one of the previous claims,
**characterised by**
means for adjusting the viscosity of the filling material (M) that is dispensed.

7. A hand-held device according to one of the previous claims,
**characterised by**
means for selectively opening or closing a discharge channel for the filling material (M).

8. A hand-held device according to one of the previous claims,
**characterised by**
a plurality of storage containers for filling materials (M) having different properties and also selection means for selectively discharging one of the filling materials (M).

9. A hand-held device according to claim 8,
**characterised in that**
the hand-held device has means for selecting and changing the viscosity of the filling material (M) that is discharged.

## Revendications

1. Pièce à main (1), en particulier pour un usage dentaire,
avec des moyens servant à fournir un faisceau provoquant le durcissement du matériau de remplissage (M), lesquels se trouvent au niveau de la pièce à main (1),
des moyens servant à fournir un matériau de remplissage (M) pâteux, dans laquelle les moyens servant à fournir le matériau de remplissage (M) comprennent une buse de sortie (6) se trouvant au niveau de l'extrémité avant de la pièce à main (1),
**caractérisée en ce**
**que** la pièce à main (1) présente une pointe de modelage (15) pouvant être installée au niveau de la buse de sortie (6), servant à traiter le matériau de remplissage (M), dans laquelle la pointe de modelage (15) peut être soumise à l'action de vibrations acoustiques ou ultrasonores par l'intermédiaire d'une unité d'entraînement se trouvant dans la pièce à main (1).

2. Pièce à main selon la revendication 1,
**caractérisée en ce**
**que** les moyens servant à fournir un faisceau sont formés par une source de lumière (10), par exemple une DEL ou une diode laser.

3. Pièce à main selon l'une quelconque des revendications précédentes,
**caractérisée en ce**
**que** la pointe de modelage (15) présente une forme conique.

4. Pièce à main selon l'une quelconque des revendications précédentes,
**caractérisée en ce**
**que** la buse de sortie (6) est réalisée de telle manière que le matériau de remplissage (M) est fourni de manière latérale par rapport à un axe longitudinal de la pièce à main (1).

5. Pièce à main selon la revendication 4,
**caractérisée en ce**
**que** les moyens servant à fournir un faisceau sont réalisés de telle manière que le faisceau (S) est fourni de manière décalée eu égard à l'axe longitudinal de la pièce à main (1), de préférence de manière décalée de 90° par rapport à la fourniture du matériau de remplissage (M).

6. Pièce à main selon l'une quelconque des revendications précédentes,
**caractérisée par**
des moyens servant à régler la viscosité du matériau de remplissage (M) fourni.

7. Pièce à main selon l'une quelconque des revendications précédentes,
**caractérisée par**
des moyens servant à ouvrir ou à fermer au choix un canal de distribution pour le matériau de remplissage (M).

8. Pièce à main selon l'une quelconque des revendications précédentes,
**caractérisée par**
plusieurs réservoirs pour des matériaux de remplissage (M) à propriétés différentes, ainsi que des moyens de sélection servant à distribuer au choix l'un des matériaux de remplissage (M).

9. Pièce à main selon la revendication 8,
**caractérisée en ce**
**que** la pièce à main présente des moyens servant à sélectionner et à modifier la viscosité du matériau de remplissage (M) distribué.
